# EUROPEAN PATENT SPECIFICATION

(11) **EP 3 795 440 B1**
(45) Date of publication and mention of the grant of the patent: **09.10.2024**
(21) Application number: 19198867.4
(22) Date of filing: 23.09.2019
(51) Int. Cl.: B60W 30/02, B60W 50/00, B60W 30/182, B60W 50/08, B60W 30/095

(54) **DYNAMIC CONTROL OF VEHICLE STABILITY CONTROL SYSTEMS**
DYNAMISCHE STEUERUNG VON FAHRZEUGSTABILITÄTSSTEUERUNGSSYSTEMEN
COMMANDE DYNAMIQUE DE SYSTÈMES DE COMMANDE DE STABILITÉ DE VÉHICULES

(43) Date of publication of application: 24.03.2021
(73) Proprietor: Ningbo Geely Automobile Research & Development Co. Ltd., Hangzhou Bay New District Ningbo 315336 (CN)
(72) Inventor: NILSSON, Magnus, 448 37 FLODA (SE); JOHANSSON, Jonathan, 417 14 GÖTEBORG (SE)
(74) Representative: Zacco Sweden AB

(56) References cited:
- DE-A1- 102010 028 837
- DE-A1- 102014 216 314
- US-A1- 2008 221 758

## Description

### TECHNICAL FIELD

The present invention relates generally to the field of vehicle operation. More particularly, it relates to dynamic control of vehicle stability control systems.

### BACKGROUND

Dynamic use in vehicles of different driving modes for different situations is known. For example, many vehicles provide the driver with a possibility to manually switch between two or more pre-determined driving modes, e.g., "sport", "comfort", "eco", etc.

Furthermore, the patent publication US 2018/186376 A1 describes an approach for switching between autonomous driving mode and manual driving mode according to environmental condition data. Two other examples of art in the field are DE 102014216314 A1 disclosing a method and device for influencing the driving dynamics of a vehicle, and US 2008/221758 A1 disclosing a method and device for actuating a vehicle occupant protection means.

Such pre-configured modes are typically constrained by safety systems (e.g., vehicle stability control systems) incorporated in the vehicle, which mitigates unsafe driving but also hinders the driver from exercising adventurous driving styles.

Therefore, there is a need for dynamic control of vehicle stability control systems.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

It is an object of some embodiments to solve or mitigate, alleviate, or eliminate at least some of the above or other disadvantages.

A first aspect of the invention is a method for operating a vehicle. The method comprises deactivating (or significantly reducing an activity of) one or more vehicle stability control systems, thereby increasing a level of direct control over operation of the vehicle for a driver of the vehicle. The method also comprises determining a state of the vehicle relative to surroundings of the vehicle, and activating (or significantly increasing the activity of) at least one of said one or more vehicle stability control systems when the determined state indicates fulfilment of a danger criterion, thereby decreasing the level of direct control over operation of the vehicle for the driver.

An advantage of this aspect is that a method is provided that enables the driver to safely exercise an adventurous driving style.

According to the invention determining the state of the vehicle relative to the surroundings of the vehicle comprises predicting an unadjusted future situation of the vehicle conditioned on that the one or more stability control systems continues to be deactivated (or have significantly reduced activity) and predicting a plurality of adjusted future situations of the vehicle, each conditioned on that the at least one of said one or more stability control systems is activated (or set to significantly increased activity) at a corresponding upcoming point in time. Then, activating (or significantly increasing the activity of) at least one of said one or more vehicle stability control systems may comprise scheduling the activation (or the significant increase of the activity) of the at least one of said one or more vehicle stability control systems at a future time when the unadjusted future situation fulfills the danger criterion, wherein the future time corresponds to the latest upcoming point in time for which the adjusted future situation of the vehicle does not fulfil the danger criterion.

An advantage thereof is that the adventurous driving style can be exercised as long as possible, while still maintaining safety.

In some embodiments, the method further comprises updating the prediction of the unadjusted future situation before the future time is reached, and - when the updated unadjusted future situation does not fulfil the danger criterion - discarding the scheduled activation (or significant increase of the activity) of the at least one of said one or more vehicle stability control systems.

An advantage of these embodiments is that the adventurous driving style is not unnecessarily interrupted by safety systems due to previous danger indications that have subsequently been mitigated by the driver.

In some embodiments, the method further comprises updating the prediction of the at least one adjusted future situation before the future time is reached, and - when the future time no longer corresponds to the latest upcoming point in time for which the updated adjusted future situation of the vehicle does not fulfil the danger criterion - re-scheduling the activation (or the significant increase of the activity) of the at least one of said one or more vehicle stability control systems at an updated future time, wherein the updated future time corresponds to the latest upcoming point in time for which the updated adjusted future situation of the vehicle does not fulfil the danger criterion.

An advantage of these embodiments is that the time provided for the driver, to mitigate a dangerous situation before interrupted by safety systems, is as long as possible.

In some embodiments, activating (or significantly increasing the activity of) at least one of said one or more vehicle stability control systems comprises immediately activating (or significantly increasing the activity of) the at least one of said one or more vehicle stability control systems when all adjusted future situations fulfill the danger criterion.

An advantage of these embodiments is that safety is not compromised.

In some embodiments, the one or more vehicle stability control systems comprises one or more of: an anti-lock braking system (ABS), an anti-slip system, a traction control system, an automatic drive system, and an automatic evasive maneuver system.

In some embodiments, the danger criterion comprises a probability of collision exceeding a threshold value.

A second aspect of the invention is a computer program comprising program instructions. The computer program is loadable into a data processing unit and configured to cause execution of the method according to the first aspect when the computer program is run by the data processing unit.

An advantage of this aspect is that a software implementation is provided of the method that enables the driver to safely exercise an adventurous driving style.

A third aspect of the invention is a computer program product comprising a computer readable medium carrying a computer program comprising program instructions. The computer program is loadable into a data processing unit and configured to cause execution of the method according to the first aspect when the computer program is run by the data processing unit. An advantage of this aspect is that a carrier is provided for the software implementing the method that enables the driver to safely exercise an adventurous driving style.

A fourth aspect of the invention is an apparatus for operating a vehicle. The apparatus comprises controlling circuitry configured to cause deactivation (or significant reduction of an activity) of one or more vehicle stability control systems, thereby causing increase of a level of direct control over operation of the vehicle for a driver of the vehicle, determination of a state of the vehicle relative to surroundings of the vehicle, and activation (or significant increase of the activity) of at least one of said one or more vehicle stability control systems responsive to the determined state indicating fulfilment of a danger criterion, thereby causing decrease of the level of direct control over operation of the vehicle for the driver.

An advantage of this aspect is that a physical apparatus is provided that enables the driver to safely exercise an adventurous driving style.

A fifth aspect of the invention is a vehicle comprising the apparatus of the fourth, aspect.

An advantage of this aspect is that a vehicle is provided that enables the driver to safely exercise an adventurous driving style.

An advantage of the invention is that the driver is provided with a possibility to safely exercise an adventurous driving style.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a flowchart illustrating example method steps according to some embodiments;
Figure 3 is a flowchart illustrating example method steps according to some embodiments;
Figure 4 is a schematic block diagram illustrating an example system comprising an example apparatus according to some embodiments;
Figure 5 is a schematic drawing illustrating an example vehicle according to some embodiments; and
Figure 6 is a schematic drawing illustrating an example computer readable medium according to some embodiments.

### DETAILED DESCRIPTION

As already mentioned above, it should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present invention will be described and exemplified more fully hereinafter with reference to the accompanying drawings. The solutions disclosed herein can, however, be realized in many different forms and should not be construed as being limited to the embodiments set forth herein.

Vehicles may generally implement one or more safety control systems (e.g., vehicle stability control systems). Typically, such systems can be disabled/enabled by a user of the vehicle. Having the safety systems enabled may impair the driving experience, while disabling the safety systems (e.g., when desired by the driver to feel like being fully in control of the vehicle) may be dangerous.

In the following, embodiments will be described where dynamic control of vehicle stability control systems provides the driver of a vehicle with a possibility to safely exercise an adventurous driving style.

Generally, when used herein the term "safety control system" should be understood to be exemplified by any suitable vehicle stability control system. Examples of vehicle stability control systems includes, but are not limited to, anti-lock braking systems, anti-slip systems, traction control systems, automatic drive systems, automatic evasive maneuver systems, and other systems which base their operation on information associated with the rotation of one or more wheels of the vehicle (e.g., information regarding relative rotation of two or more wheels).

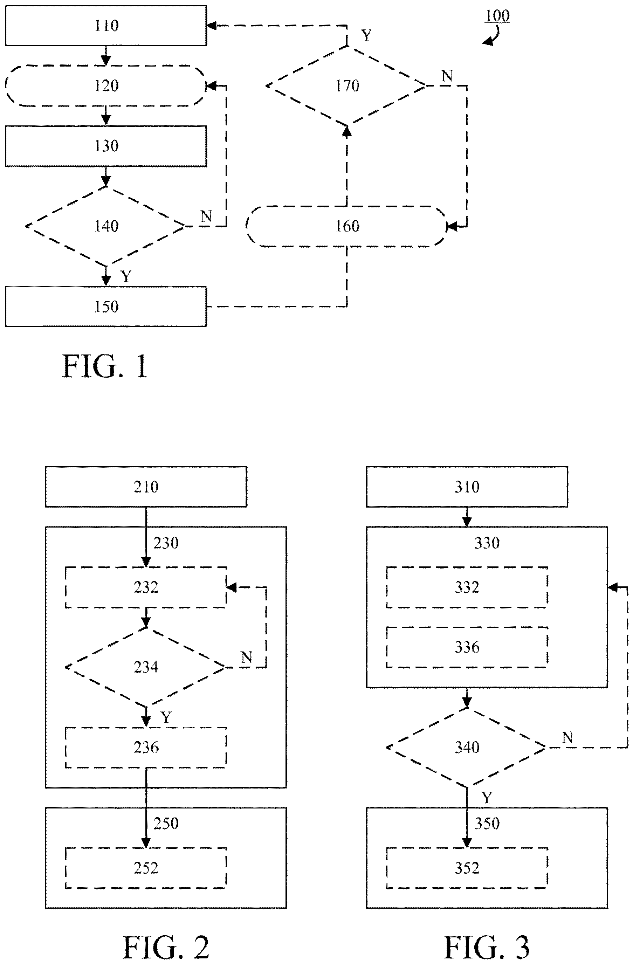

Figure 1 illustrates an example method 100 according to some embodiments. The method is for operating a vehicle. An advantage of the method 100 is that it enables the driver to safely exercise an adventurous driving style.

For example, the method may be applied when the vehicle is set to an adventurous driving mode (which may, for example, be activated by the driver via a user interface). The adventurous driving mode may be one of several pre-determined driving modes (e.g., "sport", "comfort", "eco", etc.). A possible purpose of the adventurous driving mode may be to provide the driver with a user experience resembling driving with one or more vehicle stability control systems completely disabled while also providing a safety level resembling driving with the one or more vehicle stability control systems enabled.

In step 110, one or more vehicle stability control systems are deactivated (or set to exercise a significantly reduced activity). Thereby, a first level of direct control over operation of the vehicle is increased for a driver of the vehicle. Step 110 may, for example, be performed responsive to activation of the adventurous driving mode.

After step 110 has been performed, the vehicle may be seen as being in a condition with low (or no) stability control as illustrated by 120, and the driver can exercise an adventurous driving style which is not constrained by vehicle stability control systems.

In step 130, a state of the vehicle is determined relative to surroundings of the vehicle. Typically, step 130 is performed when (possibly only when) the vehicle is in a condition with low (or no) stability control (i.e., when the vehicle stability control systems are deactivated or set to exercise a significantly reduced activity).

Step 140 illustrates detection of whether or not the determined state indicates fulfillment of a danger condition.

When the determined state does not indicate fulfilment of the danger criterion (e.g., N-path out of step 140), no intervention is conducted in relation to vehicle stability control systems, and the vehicle may remain in a condition with low (or no) stability control as illustrated by 120.

While the vehicle is in a condition with low (or no) stability control, the state of the vehicle determined in step 130 is repeatedly determined to provide a current state of the vehicle. It is detected, for each (or some) determined states, whether or not the determined state indicates fulfillment of the danger condition.

In any case, when the determined state indicates fulfilment of the danger criterion (e.g., Y-path out of step 140), at least one (e.g., one, two, some, or all) of said one or more vehicle stability control systems is (re-)activated (or set to exercise a significantly increased activity) as illustrated by step 150. Thereby, a second level of direct control over operation of the vehicle is decreased for a driver of the vehicle. Typically, the first level gives the driver more direct control over operation of the vehicle than does the second level.

After step 150 has been performed, the vehicle may be seen as being in a condition with high (or full) stability control as illustrated by 160, thereby providing safety in situations when the driver cannot mitigate danger.

While the vehicle is in a condition with high (or full) stability control, reversion to the condition with low (or no) stability control may be performed by returning to step 110. For example, reversion to the condition with low (or no) stability control may be performed responsive to a triggering event. The triggering event may be any suitable event. Example triggering events include, but are not limited to, a new determined state no longer indicating fulfilment of the danger criterion, and elapse of a pre-determined or dynamically set period of time from performance of step 150.

Optional step 170 illustrates detection of whether or not a triggering event occurs. When no triggering event occurs (N-path out of step 170), the vehicle remains in the condition with high (or full) stability control 160. When a triggering event occurs (Y-path out of step 170), the method returns to step 110 for reversion to the condition with low (or no) stability control. The activity of a vehicle stability control system may be defined as an extent to which the vehicle stability control system operates at its full potential. For example, an anti-slip system may have a dynamic threshold determining the time duration of slip allowed before performing counter actions. Then, deactivation may comprise setting the threshold to infinite duration (completely disabling counter actions), activation may comprise setting the threshold to its lowest possible value, and increasing/reducing the activity may comprise setting the threshold to values there between. Similar examples are applicable for other vehicle stability control systems.

Significant increase/reduction may be defined in relation to complete deactivation and full activation. For example, a significant reduction may comprise setting the activity closer to complete deactivation than to full activation, and a significant increase may comprise setting the activity closer to full activation than to complete activation.

Determination of the state of the vehicle relative to surroundings of the vehicle may be performed according to any suitable approach. For example, the state of the vehicle may define the relative positions of the vehicle and an obstacle of the surroundings, e.g., a distance between the vehicle and the obstacle and/or a trend of the distance between the vehicle and the obstacle (e.g., increasing or decreasing, rate of increase/decrease, etc.). In a similar example, the state of the vehicle may define the relative positions of the vehicle and border of a road/lane of the surroundings. In yet a similar example, the state of the vehicle may define the orientation of the vehicle relative to the surroundings.

The danger criterion may comprise any suitable criterion indicating a dangerous situation. For example, the danger criterion may be that the probability of a dangerous situation exceeds a threshold value. Example dangerous situations include, but are not limited to, collision with an obstacle of the surroundings, the vehicle leaving the road, the vehicle leaving the lane, spinning wheel(s) for more than a specified duration of time, vehicle body in rotation, vehicle body whipping back and forth more than a specified number of times, etc.

The state may be related to the danger criterion in any suitable manner. For example, if the state defines that the distance to an obstacle is below a corresponding threshold value and is decreasing at a rate higher than a corresponding threshold value, it may be interpreted as a probability of collision being above a corresponding threshold value, the state thus indicating fulfillment of the danger criterion.

According to the invention, the vehicle stability control systems are controlled based on predictions of what will happen if the vehicle stability control systems remain in their current setting (e.g., inactivated) and on predictions of what will happen if the setting of the vehicle stability control systems is changed (e.g., activated).

In some example implementations of an adventurous driving mode, the ABS system is configured such that, when the wheels lock up, they are allowed to stay locked up during a specified duration of time (typically several seconds), after which default ABS operation may be enforced. If an imminent collision is detected, default ABS operation may be enforced also during the specified duration of time.

In some example implementations of an adventurous driving mode, the anti-slip system is configured such that, when the wheels slip, they are allowed to slip freely during a specified duration of time (typically several seconds), after which default anti-slip operation may be enforced.

In some example implementations of an adventurous driving mode, the traction control system is configured such that, when the vehicle drifts, it is allowed to stay in drift as long as the drift is under control (wherein the drift being under control may be defined as a steady drift where the forward direction of the vehicle is always pointed to one side of the travel direction of the vehicle, for example). Default traction control operation may be enforced as soon as the drift is not under control (e.g., if the vehicle starts to whip back and forth).

Figures 2 and 3 illustrate example method steps according to some such embodiments. The steps of Figures 2 and 3 may, for example, be seen as implementation examples of the steps of Figure 1.

In steps 210 and 310, one or more vehicle stability control systems are deactivated or set to exercise a significantly reduced activity (compare with step 110 of Figure 1).

In steps 230 and 330, a state of the vehicle is determined relative to surroundings of the vehicle (compare with step 130 of Figure 1).

Steps 230 and 330 comprise predicting an unadjusted future situation of the vehicle conditioned on that the one or more stability control systems continues to be deactivated (or have significantly reduced activity) as illustrated by sub-steps 232 and 332.

Steps 230 and 330 also comprise predicting a plurality of adjusted future situations of the vehicle, each conditioned on that the at least one of said one or more stability control systems is activated (or set to significantly increased activity) at a corresponding upcoming point in time, which is illustrated by sub-steps 236 and 336. Typically, different adjusted future situations have different corresponding upcoming points in time.

As illustrated by sub-step 234 in the example of Figure 2, adjusted future situations of the vehicle (sub-step 236) is only predicted when (Y-path out of 234) the predicted unadjusted future situation of the vehicle fulfills a danger criterion according to some embodiments. Otherwise (N-path out of 234), the method loops back to sub-step 232 to monitor the unadjusted future situation. Sub-step 234 may be seen as an alternative implementation of step 140 of Figure 1. In this example, the method proceeds to step 250 after prediction of the plurality of adjusted future situations in sub-step 236.

In the example of Figure 3, adjusted future situations of the vehicle (sub-step 336) may be always predicted according to some embodiments. In such embodiments, a step 340 - which may be seen as an alternative implementation of step 140 of Figure 1 - may follow after step 330. Step 340 illustrates detection of whether the predictions of step 330 indicates fulfillment of a danger condition. When so (Y-path out of step 340), the method proceeds to step 350. Otherwise (N-path out of step 340), the method loops back to step 330 to monitor the unadjusted and adjusted future situations.

In steps 250 and 350, at least one of said one or more vehicle stability control systems is activated or set to exercise a significantly increased activity when the determined state indicates fulfilment of the danger criterion (compare with step 150 of Figure 1).

Steps 250 and 350 comprise scheduling the activation, or the significant increase of the activity, of the at least one of said one or more vehicle stability control systems at a future time corresponding to the latest upcoming point in time for which the adjusted future situation of the vehicle does not fulfil the danger criterion as illustrated by sub-steps 252 and 352.

Alternatively or additionally, steps 250 and 350 may comprise immediately activating, or significantly increasing the activity of, the at least one of said one or more vehicle stability control systems when all adjusted future situations fulfill the danger criterion.

In some embodiments, steps 250 and 350 may also comprise updating the prediction of the unadjusted future situation (compare with 232, 332) before the future time is reached and/or updating the prediction of the at least one adjusted future situation (compare with 236, 336) before the future time is reached.

Such updating may be performed according to any suitable approach. For example, updating may be performed at regular time intervals until the future time is reached, or once at a point in time before the future time (the point in time and the future time having a specified duration them between).

In such embodiments, the scheduling of activation, or significant increase of the activity, may be adjusted based on the updated prediction(s).

For example, the scheduled activation, or significant increase of the activity, may be discarded when the updated unadjusted future situation does not fulfil the danger criterion.

Alternatively or additionally, the activation, or the significant increase of the activity, may be re-scheduling to an updated future time (sooner or later than the future time), when the future time no longer corresponds to the latest upcoming point in time for which the updated adjusted future situation of the vehicle does not fulfil the danger criterion. Typically, the updated future time then corresponds to the latest upcoming point in time for which the updated adjusted future situation of the vehicle does not fulfil the danger criterion.

Embodiments illustrated by Figures 2 and 3 may provide the advantage that the adventurous driving style can be exercised as long as possible, while still maintaining safety. In some embodiments, the adventurous driving style is not unnecessarily interrupted by safety systems due to previous danger indications that have subsequently been mitigated by the driver. According to some embodiments, the time provided for the driver, to mitigate a dangerous situation before interrupted by safety systems, is as long as possible.

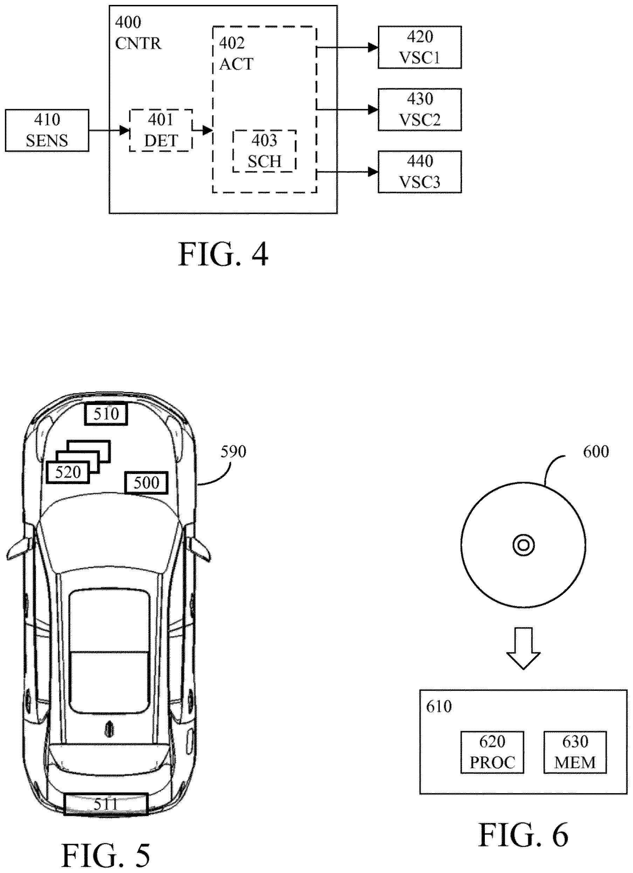

Figure 4 is a schematically illustrates an example system for operating a vehicle according to some embodiments. The system comprises one or more sensors (SENS) 410, a controller (CNTR) 400, and one or more vehicle stability control systems (VSC1, VSC2, VSC3) 420, 430, 440.

The one or more sensors are configured to provide information associated with the vehicle and/or with surroundings of the vehicle. Example sensors include cameras, radars, ultra-sound devices, distance estimators, image processors, etc.

The controller may, for example, be a control unit or a control module configured to cause execution of the method according to any of Figures 1-3 or otherwise described herein. Alternatively or additionally, the controller may be controlling circuitry, e.g., comprised in an apparatus for operating a vehicle.

The controller is configured to cause determination of a state of the vehicle relative to surroundings of the vehicle (compare with steps 130, 230, 330).

To this end, the controller may comprise, or be otherwise associated with (e.g., connectable or connected to) a determiner (DET; e.g., determination circuitry, a determination module, a determination system, etc.) 401. The determiner may be configured to determine the state of the vehicle relative to the surroundings of the vehicle; typically based on the information of the one or more sensors.

The controller is also configured to cause deactivation, or significant reduction of an activity, of one or more vehicle stability control systems, thereby causing increase of a level of direct control over operation of the vehicle for a driver of the vehicle (compare with steps 110, 210, 310) and activation, or significant increase of the activity, of at least one of said one or more vehicle stability control systems responsive to the determined state indicating fulfilment of a danger criterion, thereby causing decrease of the level of direct control over operation of the vehicle for the driver (compare with steps 150, 250, 350).

To this end, the controller may comprise, or be otherwise associated with (e.g., connectable or connected to) an activity controller (ACT; e.g., activity control circuitry, an activity control module, an activity control system, etc.) 402. The activity controller may be configured to control activation/deactivation, or significant reduction/increase of an activity, of one or more vehicle stability control systems based on the determined state as described above.

In some embodiments, a scheduler (SCH) 403 may be provided (e.g., in association with the activity controller). The scheduler may be configured to schedule the activation/deactivation, or significant reduction/increase of an activity, of one or more vehicle stability control systems (e.g., as described in connection with steps 250, 350).

Figure 5 schematically illustrates an example vehicle 590 according to some embodiments. The vehicle 590 comprises a system for operating a vehicle (e.g., the system of Figure 4). The system is schematically shown in Figure 5 in the form of two sensors 510, 511 (compare with 410), a controller 500 (compare with 400) and a plurality of vehicle stability control systems 520 (compare with 420, 430, 440).

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus for a vehicle, such as a control unit, or in a vehicle.

Embodiments may appear within an electronic apparatus for a vehicle, the apparatus comprising arrangements, circuitry, and/or logic according to any of the embodiments described herein. Alternatively or additionally, an electronic apparatus for a vehicle may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 6 illustrates an example computer readable medium in the form of a compact disc (CD) ROM 600. The computer readable medium has stored thereon a computer program comprising program instructions. The computer program is loadable into a data processor (PROC; e.g., data processing circuitry or a data processing unit) 620, which may, for example, be comprised in a control unit 610 for a vehicle. When loaded into the data processor, the computer program may be stored in a memory (MEM) 630 associated with or comprised in the data processor. According to some embodiments, the computer program may, when loaded into and run by the data processor, cause execution of method steps according to, for example, any of the methods illustrated in Figures 1-3 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments according to the appended claims.

For example, the method embodiments described herein disclose example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Hence, it should be understood that the details of the described embodiments are merely examples brought forward for illustrative purposes, and that all variations that fall within the scope of the claims are intended to be embraced therein.

## Claims

1. A method for operating a vehicle, the method comprising:
deactivating, or significantly reducing (110; 210; 310) an activity of, one or more vehicle stability control systems, thereby increasing a level of direct control over operation of the vehicle for a driver of the vehicle;
determining a state of the vehicle relative to surroundings of the vehicle (130; 230; 330); and
activating, or significantly increasing the activity of, at least one of said one or more vehicle stability control systems Z (150; 250; 350) when the determined state indicates fulfilment of a danger criterion (140; 340), thereby decreasing the level of direct control over operation of the vehicle for the driver
wherein determining the state of the vehicle relative to the surroundings of the vehicle comprises:
predicting an unadjusted future situation of the vehicle conditioned on that the one or more stability control systems continues to be deactivated, or have significantly reduced activity (232; 332); and **characterized in** predicting a plurality of adjusted future situations of the vehicle, each conditioned on that the at least one of said one or more stability control systems is activated, or set to significantly increased activity, at a corresponding upcoming point in time (236; 336); and
wherein activating, or significantly increasing the activity of, at least one of said one or more vehicle stability control systems comprises:
scheduling the activation (250; 350), or the significant increase of the activity, of the at least one of said one or more vehicle stability control systems at a future time when the unadjusted future situation fulfills the danger criterion, wherein the future time corresponds to the latest upcoming point in time for which the adjusted future situation of the vehicle does not fulfil the danger criterion.

2. The method of claim 1, further comprising:
updating the prediction of the unadjusted future situation before the future time is reached; and
when the updated unadjusted future situation does not fulfil the danger criterion, discarding the scheduled activation, or significant increase of the activity, of the at least one of said one or more vehicle stability control systems.

3. The method of any of the preceding claims, further comprising:
updating the prediction of the at least one adjusted future situation before the future time is reached; and
when the future time no longer corresponds to the latest upcoming point in time for which the updated adjusted future situation of the vehicle does not fulfil the danger criterion:
re-scheduling the activation, or the significant increase of the activity, of the at least one of said one or more vehicle stability control systems at an updated future time, wherein the updated future time corresponds to the latest upcoming point in time for which the updated adjusted future situation of the vehicle does not fulfil the danger criterion.

4. The method of any the preceding claims, wherein activating, or significantly increasing the activity of, at least one of said one or more vehicle stability control systems comprises immediately activating, or significantly increasing the activity of, the at least one of said one or more vehicle stability control systems when all adjusted future situations fulfill the danger criterion.

5. The method of any of the preceding claims, wherein the one or more vehicle stability control systems comprises one or more of: an anti-lock braking system - ABS, an anti-slip system, a traction control system, an automatic drive system, and an automatic evasive maneuver system .

6. The method of any of the preceding claims, wherein the danger criterion comprises a probability of collision exceeding a threshold value.

7. A computer program comprising program instructions, the computer program being loadable into a data processing unit and configured to cause execution of the method according to any of claims 1 to 6 when the computer program is run by the data processing unit.

8. A computer program product comprising a computer readable medium carrying a computer program comprising program instructions, the computer program being loadable into a data processing unit and configured to cause execution of the method according to any of claims 1 to 6 when the computer program is run by the data processing unit.

9. An apparatus for operating a vehicle, the apparatus comprising controlling circuitry configured to cause:
deactivation, or significant reduction of an activity, of one or more vehicle stability control systems, thereby causing increase of a level of direct control over operation of the vehicle for a driver of the vehicle;
determination of a state of the vehicle relative to surroundings of the vehicle; and
activation, or significant increase of the activity, of at least one of said one or more vehicle stability control systems responsive to the determined state indicating fulfilment of a danger criterion, thereby causing decrease of the level of direct control over operation of the vehicle for the driver
wherein determining the state of the vehicle relative to the surroundings of the vehicle comprises:
predicting an unadjusted future situation of the vehicle conditioned on that the one or more stability control systems continues to be deactivated, or have
significantly reduced activity; and
**characterized in**
predicting a plurality of adjusted future situations of the vehicle, each conditioned on that the at least one of said one or more stability control systems is activated, or set to significantly increased activity, at a corresponding upcoming point in time; and
wherein activating, or significantly increasing the activity of, at least one of said one or more vehicle stability control systems comprises:
scheduling the activation, or the significant increase of the activity, of the at least one of said one or more vehicle stability control systems at a future time when the unadjusted future situation fulfills the danger criterion, wherein the future time corresponds to the latest upcoming point in time for which the adjusted future situation of the vehicle does not fulfil the danger criterion.

10. The apparatus of claim 9, wherein the one or more vehicle stability control systems comprises one or more of: an anti-lock braking system - ABS, an anti-slip system, and a traction control system, an automatic drive system, and an automatic evasive maneuver system.

11. The apparatus of any of claims 9 through 10, wherein the danger criterion comprises a probability of collision exceeding a threshold value.

12. A vehicle comprising the apparatus of any of claims 9 through 11.

## Patentansprüche

1. Verfahren zum Betreiben eines Fahrzeugs, wobei das Verfahren Folgendes umfasst:
Abschalten, oder erhebliches Reduzieren (110; 210; 310) einer Aktivität, eines oder mehrerer Fahrzeugstabilitätssteuerungssysteme, wodurch ein Niveau von direkter Steuerung des Betriebs des Fahrzeugs für einen Fahrer des Fahrzeugs erhöht wird;
Bestimmen eines Zustands des Fahrzeugs relativ zu einer Umgebung des Fahrzeugs (130; 230; 330); und
Anschalten, oder erhebliches Erhöhen der Aktivität, mindestens eines des einen oder der mehreren Fahrzeugstabilitätssteuerungssysteme (150; 250; 350), wenn der bestimmte Zustand eine Erfüllung eines Gefahrenkriteriums (140; 340) angibt, wodurch das Niveau von direkter Steuerung des Betriebs des Fahrzeugs für den Fahrer verringert wird,
wobei das Bestimmen des Zustands des Fahrzeugs relativ zu der Umgebung des Fahrzeugs Folgendes umfasst:
Vorhersagen einer nicht angepassten zukünftigen Situation des Fahrzeugs unter der Bedingung, dass das eine oder die mehreren Stabilitätssteuerungssysteme weiterhin abgeschaltet sind oder erheblich reduzierte Aktivität aufweisen (232; 332); und
**gekennzeichnet durch**
Vorhersagen einer Vielzahl von angepassten zukünftigen Situationen des Fahrzeugs, jeweils unter der Bedingung, dass das mindestens eine des einen oder der mehreren Stabilitätssteuerungssysteme zu einem entsprechenden bevorstehenden Zeitpunkt angeschaltet wird oder auf erheblich erhöhte Aktivität eingestellt wird (236; 336); und wobei das Anschalten, oder erhebliche Erhöhen der Aktivität, mindestens eines des einen oder der mehreren Fahrzeugstabilitätssteuerungssysteme Folgendes umfasst:
Einplanen der Anschaltung (250; 350), oder der erheblichen Erhöhung der Aktivität, des mindestens einen des einen oder
der mehreren Fahrzeugstabilitätssteuerungssysteme zu einer zukünftigen Zeit, wenn die nicht angepasste zukünftige Situation das Gefahrenkriterium erfüllt, wobei die zukünftige Zeit dem spätesten bevorstehenden Zeitpunkt entspricht, für den die angepasste zukünftige Situation des Fahrzeugs das Gefahrenkriterium nicht erfüllt.

2. Verfahren nach Anspruch 1, ferner umfassend:
Aktualisieren der Vorhersage der nicht angepassten zukünftigen Situation, bevor die zukünftige Zeit erreicht ist; und
wenn die aktualisierte nicht angepasste zukünftige Situation das Gefahrenkriterium nicht erfüllt, Verwerfen der eingeplanten Anschaltung, oder erheblichen Erhöhung der Aktivität, des mindestens einen des einen oder der mehreren Fahrzeugstabilitätssteuerungssysteme.

3. Verfahren nach einem der vorhergehenden Ansprüche, ferner umfassend:
Aktualisieren der Vorhersage der mindestens einen angepassten zukünftigen Situation, bevor die zukünftige Zeit erreicht ist; und
wenn die zukünftige Zeit nicht mehr dem spätesten bevorstehenden Zeitpunkt entspricht, für den die aktualisierte angepasste zukünftige Situation des Fahrzeugs das Gefahrenkriterium nicht erfüllt:
erneutes Einplanen der Anschaltung, oder der erheblichen Erhöhung der Aktivität, des mindestens einen des einen oder der mehreren Fahrzeugstabilitätssteuerungssysteme zu einer aktualisierten zukünftigen Zeit, wobei die aktualisierte zukünftige Zeit dem spätesten bevorstehenden Zeitpunkt entspricht, für den die aktualisierte angepasste zukünftige Situation des Fahrzeugs das Gefahrenkriterium nicht erfüllt.

4. Verfahren nach einem der vorhergehenden Ansprüche, wobei das Anschalten, oder erhebliche Erhöhen der Aktivität, mindestens eines des einen oder der mehreren Fahrzeugstabilitätssteuerungssysteme unmittelbares Anschalten, oder erhebliches Erhöhen der Aktivität, des mindestens einen des einen oder der mehreren Fahrzeugstabilitätssteuerungssysteme umfasst, wenn alle angepassten zukünftigen Situationen das Gefahrenkriterium erfüllen.

5. Verfahren nach einem der vorhergehenden Ansprüche, wobei das eine oder die mehreren Fahrzeugstabilitätssteuerungssysteme eines oder mehrere der Folgenden umfassen: eines Antiblockiersystems - ABS, eines Antischlupfsystems, eines Traktionssteuerungssystems, eines automatischen Antriebssystems und eines automatischen Ausweichmanöversystems.

6. Verfahren nach einem der vorhergehenden Ansprüche, wobei das Gefahrenkriterium umfasst, dass eine Kollisionswahrscheinlichkeit einen Schwellenwert überschreitet.

7. Computerprogramm, das Programmanweisungen umfasst, wobei das Computerprogramm in eine Datenverarbeitungseinheit ladbar ist und dazu konfiguriert ist, eine Ausführung des Verfahrens nach einem der Ansprüche 1 bis 6 zu bewirken, wenn das Computerprogramm durch die Datenverarbeitungseinheit ausgeführt wird.

8. Computerprogrammprodukt, das ein computerlesbares Medium umfasst, das ein Computerprogramm trägt, das Programmanweisungen umfasst, wobei das Computerprogramm in eine Datenverarbeitungseinheit ladbar ist und dazu konfiguriert ist, eine Ausführung des Verfahrens nach einem der Ansprüche 1 bis 6 zu bewirken, wenn das Computerprogramm durch die Datenverarbeitungseinheit ausgeführt wird.

9. Vorrichtung zum Betreiben eines Fahrzeugs, wobei die Vorrichtung eine Steuerschaltung umfasst, die dazu konfiguriert ist, Folgendes zu bewirken:
Abschaltung, oder erhebliche Reduzierung einer Aktivität, eines oder mehrerer Fahrzeugstabilitätssteuerungssysteme, wodurch eine Erhöhung eines Niveaus von direkter Steuerung des Betriebs des Fahrzeugs für einen Fahrer des Fahrzeugs bewirkt wird;
Bestimmung eines Zustands des Fahrzeugs relativ zu einer Umgebung des Fahrzeugs; und
Anschaltung, oder erhebliche Erhöhung der Aktivität, mindestens eines des einen oder der mehreren Fahrzeugstabilitätssteuerungssysteme als Reaktion darauf, dass der bestimmte Zustand eine Erfüllung eines Gefahrenkriteriums angibt, wodurch eine Verringerung des Niveaus von direkter Steuerung des Betriebs des Fahrzeugs für den Fahrer bewirkt wird,
wobei das Bestimmen des Zustands des Fahrzeugs relativ zu der Umgebung des Fahrzeugs Folgendes umfasst:
Vorhersagen einer nicht angepassten zukünftigen Situation des Fahrzeugs unter der Bedingung, dass das eine oder die mehreren Stabilitätssteuerungssysteme weiterhin abgeschaltet sind oder erheblich reduzierte Aktivität aufweisen; und
**gekennzeichnet durch**
Vorhersagen einer Vielzahl von angepassten zukünftigen Situationen des Fahrzeugs, jeweils unter der Bedingung, dass das mindestens eine des einen oder der mehreren Stabilitätssteuerungssysteme zu einem entsprechenden bevorstehenden Zeitpunkt angeschaltet wird oder auf erheblich erhöhte Aktivität eingestellt wird; undwobei das Anschalten, oder erhebliche Erhöhen der Aktivität, mindestens eines des einen oder der mehreren Fahrzeugstabilitätssteuerungssysteme Folgendes umfasst:
Einplanen der Anschaltung, oder der erheblichen Erhöhung der Aktivität, des mindestens einen des einen oder der mehreren Fahrzeugstabilitätssteuerungssysteme zu einer zukünftigen Zeit, wenn die nicht angepasste zukünftige Situation das Gefahrenkriterium erfüllt, wobei die zukünftige Zeit dem spätesten bevorstehenden Zeitpunkt entspricht, für den die angepasste zukünftige Situation des Fahrzeugs das Gefahrenkriterium nicht erfüllt.

10. Vorrichtung nach Anspruch 9, wobei das eine oder die mehreren Fahrzeugstabilitätssteuerungssysteme eines oder mehrere der Folgenden umfassen: eines Antiblockiersystems - ABS, eines Antischlupfsystems und eines Traktionssteuerungssystems, eines automatischen Antriebssystems und eines automatischen Ausweichmanöversystems.

11. Vorrichtung nach einem der Ansprüche 9 bis 10, wobei das Gefahrenkriterium umfasst, dass eine Kollisionswahrscheinlichkeit einen Schwellenwert überschreitet.

12. Fahrzeug, das die Vorrichtung nach einem der Ansprüche 9 bis 11 umfasst.

## Revendications

1. Procédé de fonctionnement d'un véhicule, le procédé comprenant :
la désactivation, ou la réduction de manière significative (110 ; 210 ; 310), d'une activité d'un ou de plusieurs systèmes de commande de stabilité de véhicules, augmentant ainsi un niveau de commande directe sur le fonctionnement du véhicule pour un conducteur du véhicule ;
la détermination d'un état du véhicule par rapport à l'environnement du véhicule (130 ; 230 ; 330) ; et
l'activation, ou l'augmentation de manière significative de l'activité, d'au moins un desdits un ou plusieurs systèmes de commande de stabilité de véhicules (150 ; 250 ; 350) lorsque l'état déterminé indique la satisfaction d'un critère de danger (140 ; 340),
réduisant ainsi le niveau de commande directe sur le fonctionnement du véhicule pour le conducteur dans lequel la détermination de l'état du véhicule par rapport à l'environnement du véhicule comprend :
la prédiction d'une situation future non ajustée du véhicule conditionnée au fait que les un ou plusieurs systèmes de commande de stabilité continuent d'être désactivés ou ont une activité significativement réduite (232 ; 332) ; et
**caractérisé par**
la prédiction d'une pluralité de situations futures ajustées du véhicule, chacune étant conditionnée au fait que l'au moins un desdits un ou plusieurs systèmes de commande de stabilité est activé, ou réglé sur une activité significativement augmentée, à un moment à venir correspondant (236 ; 336) ; et
dans lequel l'activation, ou l'augmentation de manière significative de l'activité, d'au moins un desdits un ou plusieurs systèmes de commande de stabilité de véhicules comprend :
la planification de l'activation (250 ; 350), ou de l'augmentation significative de l'activité, de l'au moins un desdits un ou plusieurs systèmes de commande de stabilité de véhicules à un instant futur lorsque la situation future non ajustée satisfait au critère de danger, dans lequel l'instant futur correspond au dernier moment à venir pour lequel la situation future ajustée du véhicule ne satisfait pas au critère de danger.

2. Procédé selon la revendication 1, comprenant en outre :
la mise à jour de la prédiction de la situation future non ajustée avant que l'instant futur ne soit atteint ; et
lorsque la situation future non ajustée mise à jour ne satisfait pas au critère de danger, le rejet de l'activation, ou de l'augmentation significative de l'activité, planifiée de l'au moins un desdits un ou plusieurs systèmes de commande de stabilité de véhicules.

3. Procédé selon l'une quelconque des revendications précédentes, comprenant en outre :
la mise à jour de la prédiction de l'au moins une situation future ajustée avant que l'instant futur ne soit atteint ; et
lorsque l'instant futur ne correspond plus au dernier moment à venir pour lequel la situation future ajustée mise à jour du véhicule ne satisfait pas au critère de danger :
la replanification de l'activation, ou de l'augmentation significative de l'activité, de l'au moins un desdits un ou plusieurs systèmes de commande de stabilité de véhicules à un instant futur mis à jour, dans lequel l'instant futur mis à jour correspond au dernier moment à venir pour lequel la situation future ajustée mise à jour du véhicule ne satisfait pas au critère de danger.

4. Procédé selon l'une quelconque des revendications précédentes, dans lequel l'activation, ou l'augmentation de manière significative de l'activité, d'au moins un desdits un ou plusieurs systèmes de commande de stabilité de véhicules comprend immédiatement l'activation, ou l'augmentation de manière significative de l'activité, de l'au moins un desdits un ou plusieurs systèmes de commande de stabilité de véhicules lorsque toutes les situations futures ajustées satisfont au critère de danger.

5. Procédé selon l'une quelconque des revendications précédentes, dans lequel les un ou plusieurs systèmes de commande de stabilité de véhicules comprennent un ou plusieurs éléments parmi : un système de freinage antiblocage, ABS, un système antidérapant, un système de commande de traction, un système de conduite automatique et un système de manoeuvre d'évitement automatique.

6. Procédé selon l'une quelconque des revendications précédentes, dans lequel le critère de danger comprend une probabilité de collision dépassant une valeur seuil.

7. Programme informatique comprenant des instructions de programme, le programme informatique pouvant être chargé dans une unité de traitement de données et configuré pour provoquer l'exécution du procédé selon l'une quelconque des revendications 1 à 6 lorsque le programme informatique est exécuté par l'unité de traitement de données.

8. Produit de programme informatique comprenant un support lisible par ordinateur contenant un programme informatique comprenant des instructions de programme, le programme informatique pouvant être chargé dans une unité de traitement de données et configuré pour provoquer l'exécution du procédé selon l'une quelconque des revendications 1 à 6 lorsque le programme informatique est exécuté par l'unité de traitement de données.

9. Appareil pour faire fonctionner un véhicule, l'appareil comprenant un circuit de commande configuré pour provoquer :
la désactivation, ou la réduction significative d'une activité, d'un ou de plusieurs systèmes de commande de stabilité de véhicules, provoquant ainsi une augmentation d'un niveau de commande directe sur le fonctionnement du véhicule pour le conducteur du véhicule ;
la détermination d'un état du véhicule par rapport à l'environnement du véhicule ; et
l'activation, ou l'augmentation significative de l'activité, d'au moins un desdits un ou plusieurs systèmes de commande de stabilité de véhicules en réponse à l'état déterminé indiquant la satisfaction à un critère de danger, provoquant ainsi une diminution du niveau de commande directe sur le fonctionnement du véhicule pour le conducteur
dans lequel la détermination de l'état du véhicule par rapport à l'environnement du véhicule comprend :
la prédiction d'une situation future non ajustée du véhicule conditionnée au fait que les un ou plusieurs systèmes de commande de stabilité continuent d'être désactivés ou ont une activité significativement réduite ; et
**caractérisé par**
la prédiction d'une pluralité de situations futures ajustées du véhicule, chacune étant conditionnée au fait que l'au moins un desdits un ou plusieurs systèmes de commande de stabilité est activé, ou réglé sur une activité significativement augmentée, à un moment à venir correspondant ; et
dans lequel l'activation, ou l'augmentation de manière significative de l'activité, d'au moins un desdits un ou plusieurs systèmes de commande de stabilité de véhicules comprend :
la planification de l'activation, ou de l'augmentation significative de l'activité, de l'au moins un desdits un ou
plusieurs systèmes de commande de stabilité de véhicules à un instant futur lorsque la situation future non ajustée satisfait au critère de danger, dans lequel l'instant futur correspond au dernier moment à venir pour lequel la situation future ajustée du véhicule ne satisfait pas au critère de danger.

10. Appareil selon la revendication 9, dans lequel les un ou plusieurs systèmes de commande de stabilité de véhicules comprennent un ou plusieurs éléments parmi : un système de freinage antiblocage, ABS, un système antidérapant, un système de commande de traction, un système de conduite automatique et un système de manoeuvre d'évitement automatique.

11. Appareil selon l'une quelconque des revendications 9 à 10, dans lequel le critère de danger comprend une probabilité de collision dépassant une valeur seuil.

12. Véhicule comprenant l'appareil selon l'une quelconque des revendications 9 à 11.
